# EUROPÄISCHE PATENTSCHRIFT

(11) **EP 0 864 284 B1**
(45) Veröffentlichungstag und Bekanntmachung des Hinweises auf die Patenterteilung: **28.07.2004**
(21) Anmeldenummer: 97104317.9
(22) Anmeldetag: 13.03.1997
(51) Int. Cl.: A47J 31/40

(54) **Kaffeemaschine**
Coffee preparing apparatus
Machine à café

(43) Veröffentlichungstag der Anmeldung: 16.09.1998
(73) Patentinhaber: WMF WÜRTTEMBERGISCHE METALLWARENFABRIK AG, 73309 Geislingen/Steige (DE)
(72) Erfinder: Motsch, Hans, 73312 Geislingen/St. (DE)
(74) Vertreter: Grünecker, Kinkeldey, Stockmair & Schwanhäusser Anwaltssozietät

(56) Entgegenhaltungen:
- EP-A- 0 443 054
- DE-C- 3 843 568
- GB-A- 1 169 493
- US-A- 1 496 806
- US-A- 2 558 062

## Beschreibung

Die Erfindung bezieht sich auf eine Kaffeemaschine der im Obergriff von Anspruch 1 läuterten Art.

Eine derartige Kaffeemaschine ist aus der GB- A-1 169 493 bekannt. Die bekannte Kaffeemaschine enthält eine zylindrische Brüheinrichtung, die mit einem Deckel verschließbar ist Der Deckel ist über ein Hebelgetriebe mit einem Zug- und Schubknopf an der Außenseite des Gehäuses der Kaffeemaschine verbunden. Der Knopf muss vom Benutzer manuell gezogen werden, wenn der Deckel geöffnet werden soll und manuell wieder in das Gehäuse hineingeschoben werden, wenn der Deckel geschlossen werden soll. Der Deckel wird bei dieser Betätigung um eine horizontale, neben dem Rand der Öffnung der Brüheinrichtung liegende Achse verschwenkt. Die bekannte Ausgestaltung eignet sich jedoch nicht für moderne Kaffeemaschinen mit automatisiertem Verfahrensablauf und zur Verwendung eines Antriebs.

Eine weitere, aus der DE 38 43 568 C1 bekannte Kaffeemaschine hat eine Brüheinrichtung mit einer nach oben weisenden Öffnung, über die Kaffeemehl in die Brüheinrichtung eindosiert wird. Diese obere Öffnung muß jedoch beim Zubereiten von Espresso auf jeden Fall druckdicht verschlossen werden, da die Espressozubereitung unter einem vergleichsweise hohen Überdruck erfolgt. Aber auch bei der Zubereitung von Filterkaffee kann es zweckmäßig sein, unter einem allerdings geringen Überdruck zu arbeiten, um das Brühwasser schneller durch das Kaffeemehl zu drücken und somit die Brühzeit zu verkürzen. Eine für die Brüheinrichtung derartiger Kaffeemaschinen verwendete Abdeckung muß deshalb eine realtiv komplizierte Bewegung von einer die Brühöffnung vollständig freigebenden, ersten Position über eine zweite Position fluchtend oberhalb der Brühöffnung in eine dritte Position, auf die Brühöffnung gedrückt, ausführen. Bei der bekannten Kaffeemaschine ist zu diesem Zweck das Verschlußstück oder die Abdeckung auf einem horizontal und parallel zur oberen Öffnung verschiebbaren Schlitten angeordnet, wobei der Schlitten über einen ersten Antrieb angetrieben wird. Auf dem Schlitten ist ein zweiter Antrieb mit einem Exzenter vorgesehen, der mit dem Schlitten verschoben wird und die Bewegung der Abdeckung in die dritte Position übernimmt. Dieser zweiphasige Bewegungsablauf ist sowohl konstruktiv als auch in der Steuerung relativ kompliziert und störanfällig.

Aus der US-PS 2 827 845 ist es weiterhin bekannt, die Abdeckung einer Brüheinrichtung einer Kaffeemaschine über ein Hebelgetriebe in die erforderlichen drei Positionen zu bewegen. Das Hebelgetriebe wird jedoch über Nocken und Nockenfolger angetrieben, und kann somit nicht in der dritten Position so gesperrt werden, daß die Brüheinrichtung druckdicht, auch bei den für die Espressozubereitung erforderlichen hohen Drücken, abgeschlossen werden kann.

Der Erfindung liegt somit die Aufgabe zugrunde, eine Kaffeemaschine bereitzustellen, bei der die Abdeckung einer Brüheinrichtung auf konstruktiv einfache Weise zwischen den erforderlichen Positionen bewegt und auf ebenfalls konstruktiv einfache Weise in der dritten Position gesperrt werden kann.

Die Aufgabe wird durch die im Anspruch 1 angegebenen Merkmale gelöst.

Wenn man, wie erfindungsgemäß vorgeschlagen, eine Über-Totpunktlage des Hebelgetriebes zum Sperren ausnutzt, kann auch bei Kaffeemaschinen, deren Brüheinrichtung eine Sperrung in einer Position erfordert, ein auf konstruktiv einfache Weise komplizierte Bewegungen zulassendes Hebelgetriebe eingesetzt werden, wobei ein einphasiger Bewegungsablauf zwischen allen drei Positionen besonders einfach zu verwirklichen ist, wenn die Abdeckung um die gleiche Achse verdrehund an ihr entlang axial verschiebbar ist.

Die Anordnung des Hebelgetriebes in der Drehachse gemäß Anspruch 2 führt zu einer besonders einfachen, aber zweckmäßigen Konstruktion.

Die Ansprüche 3 und 4 beschreiben ein besonders bevorzugtes Ausführungsbeispiel eines Hebelgetriebes.

Durch die Ausbildung nach Anspruch 5 wird die Sperrlage des Hebels definiert und damit die Sperrung der Abdeckung verbessert.

Anspruch 6 beschreibt eine besonders wirksame Sperrstellung der als Hebel verwendeten Stifte.

In der Ausgestaltung nach Anspruch 7 können die als Hebel verwendeten Stifte auch zum Übertragen einer Drehbewegung zwischen den Flanschen verwendet werden.

Zweckmäßigerweise ist der Über-Totpunktlage des Hebelgetriebes gemäß Anspruch 8 wenigstens ein Anschlag zugeordnet, der ein "Überfahren" der Über-Totpunktlage des Hebels verhindert und/oder eine Bewegung des Hebels in die Über-Totpunktlage einleitet.

Auch die Führung gemäß Anspruch 9 dient dazu, unerwünschte Bewegungen des Hebelgetriebes zu verhindern.

Anspruch 10 beschreibt eine besonders bevorzugte konstruktive Ausgestaltung des Hebelgetriebes, das durch die Verwendung der Hülse kompakt, einfach und wenig störanfällig ist.

Die Ansprüche 11 bis 13 beschreiben konstruktiv bevorzugte Ausbildungen der Abdekkung, die beim Einsatz des erfindungsgemäßen Hebelgetriebes besonders zweckmäßig sind. So erlaubt die Anordnung der Abdeckung an einem Auslegerarm gemäß Anspruch 11 die in Anspruch 12 beschriebene, zusätzliche Sperrung durch ein Gegenlager. Durch die Ausgestaltung nach Anspruch 13 wird sichergestellt, daß sich die Abdeckung immer parallel zur Öffnung ausrichten kann.

Ein Ausführungsbeispiel der Erfindung wird nachfolgend anhand der Zeichnungen näher erläutert. Es zeigen:
- Fig. 1: eine schematische Darstellung einer erfindungsgemäßen Kaffeemaschine,
- Fig. 2: einen Längsschnitt durch die Abdeckung,
- Fig. 3: einen Längsschnitt durch das Hebelgetriebe,
- Fig. 4: eine auseinandergezogene Darstellung der Teile der Abeckung und des Hebelgetriebes,
- Fig. 5: eine Draufsicht auf einen Flansch,
- Fig. 6: einen Längsschnitt durch die Hülse,
- Fig. 7: den Schnitt VII-VII aus Fig. 5,
- Fig. 8: die Stellung des Stiftes in einer Position, und
- Fig. 9: die Stellung des Stiftes in einer weiteren Posi tion.

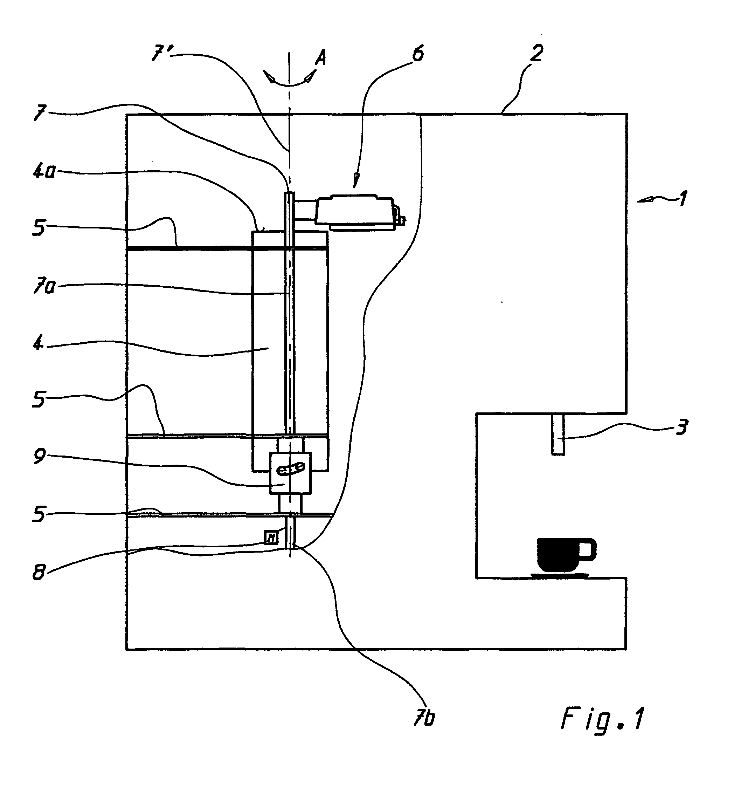

Aus der Fig. 1 ist in schematischer Darstellung eine Kaffeemaschine 1 mit einem Gehäuse 2 und einem Auslauf 3 für Kaffeegetränk, entweder nur Espresso oder Espresso und Filterkaffee ersichtlich. Innerhalb des Gehäuses 2 ist im dargestellten Ausführungsbeispiel eine im wesentlichen rohrförmige Brüheinheit 4 vorgesehen, die über Konsolen 5 im Gehäuse 2 aufgehängt ist. Die Brüheinrichtung 4 kann jede zum Zubereiten von Espresso oder von Espresso und Filterkaffee geeignete Konstruktion aufweisen und wird über eine nach oben weisende Öffnung 4a mit dem entsprechenden Kaffeemehl befüllt. Die Zufuhreinrichtungen für Kaffeemehl und alle anderen für eine im wesentlichen automatisch arbeitende Kaffeemaschine notwendigen Teile sind der Übersichtlichkeit wegen nicht dargestellt.

Die obere Öffnung 4a kann durch eine Abdeckung 6 verschlossen werden, die in weiter unten beschriebener Weise über eine Antriebswelle 7 durch einen nur schematisch dargestellten Motor 8 um die als Drehachse 7' ausgebildeten Mittellinie der Antriebswelle 7 verschwenkt werden kann. Die Antriebswelle 7 erstreckt sich vertikal und parallel zur Brüheinrichtung 4 und wird ebenfalls durch die Konsolen 5 gehalten. Die Antriebswelle 7 besteht aus einem ersten Teil 7a, der mit der Abdeckung 6 verbunden ist, und einem zweiten Teil 7b, der durch den Motor 8 angetrieben wird. Der erste Teil 7a und der zweite Teil 7b sind über ein Hebelgetriebe 9 miteinander verbunden. Das Hebelgetriebe 9 gestattet es, daß die Abdeckung 6 aus der in Fig. 1 gezeichneten Position, in der die Abdeckung 6 neben der Öffnung 4a liegt, die Öffnung 4a somit zum Beschicken mit Kaffeemehl nach oben hin freiliegt, in eine Position fluchtend oberhalb der Öffnung 4a verdreht wird in Richtung des Pfeiles A, wenn durch den Motor 8 die Antriebswelle 7 um diesen Schwenkbetrag verdreht wird. Das Hebelgetriebe 9 gestattet es weiterhin in noch zu beschreibender Weise, daß sich die Abdeckung 6 in einem einphasigen Bewegungsablauf zwischen der ersten und der zweiten Position entlang der Drehachse 7' verschwenkt und in eine dritte Position axial nach unten bewegt, und dort gesperrt wird, wenn der Motor 8 die Antriebswelle 7 um den vorbestimmten Winkelbereich zwischen der ersten und der zweiten Position drehend antreibt.

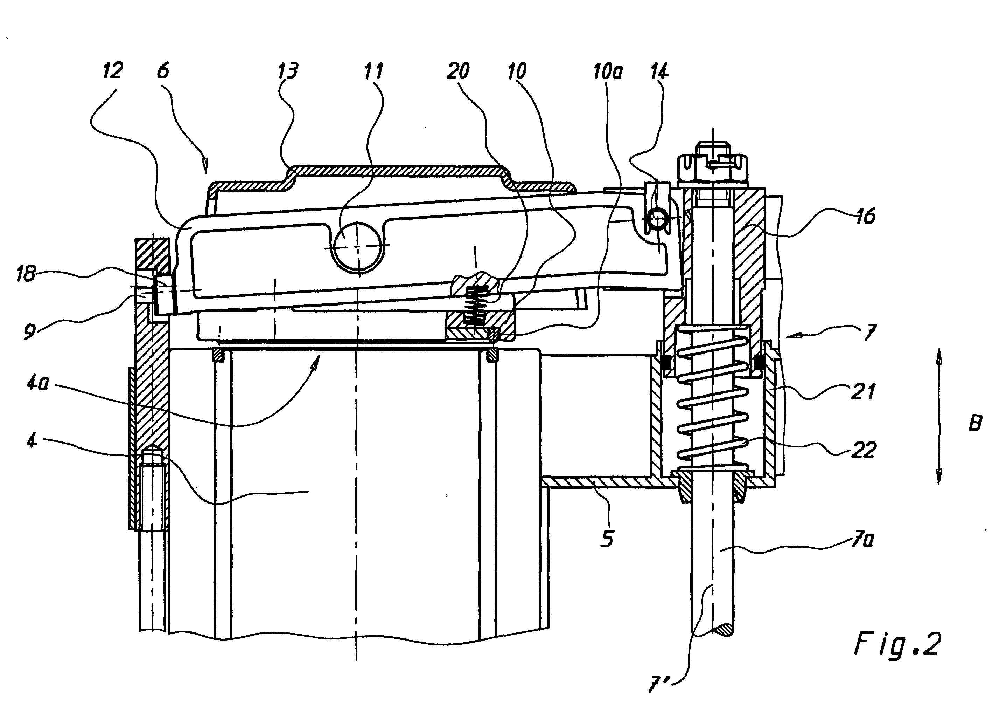

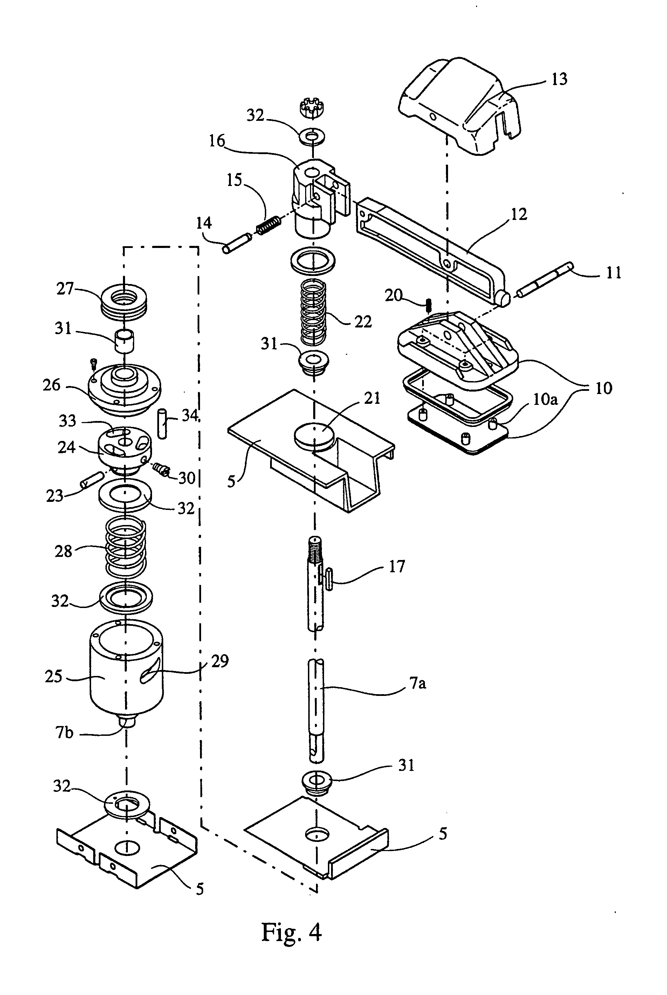

Die Abdeckung 6 enthält, wie die Fig. 2 und 4 zeigen, das eigentliche Dichtteil 10 mit einer Ringdichtung 10a, das über einen Bolzen 11 schwenkbar mit einem Auslegerarm 12 verbunden ist, und eine Haube 13. Der Auslegerarm 12 ist mit einem seiner Enden über einen horizontalen Bolzen 14 und eine Feder 15 mit einer Hülse 16, durch Anschläge begrenzt auf- und abwärts verschwenkbar gelagert. Die Hülse 16 ist über einen Keil 17 auf das erste Teil 7a der Antriebswelle 7 aufgekeilt.

Das freie Ende des Auslegerarms 12 ist mit einem Ansatz 18 versehen, der in ein gehäusefestes Gegenlager 19 eingreifen kann, wenn sich die Abdeckung 6 in der in Fig. 2 dargestellten zweiten Position befindet.

In dieser Position verläuft der Auslegerarm 12 von seiner Anlenkung an der Antriebswelle 7 bis zu seinem freien Ende am Gegenlager 19 leicht schräg von oben nach unten, wobei das Ende an der Antriebswelle 7 höherliegt. Das Dichtteil 10 stützt sich über eine Feder 20 am Auslegerarm 12 so ab, daß das Dichtteil 10 am freien Ende des Auslegerarmes 12 an diesem anliegt und durch die Feder 20 in eine zur Öffnung 4a im wesentlichen parallele Stellung gedrückt wird.

Die Hülse 16 ist in einem Zylinder 21 coaxial zur Drehachse 7'in Richtung des Doppelpfeiles B verschiebbar, wobei im Zylinder 21 eine Feder 22 aufgenommen ist, die die Hülse 16 in ihre äußerste, oberste Position, wie sie in Fig. 2 dargestellt ist, drückt.

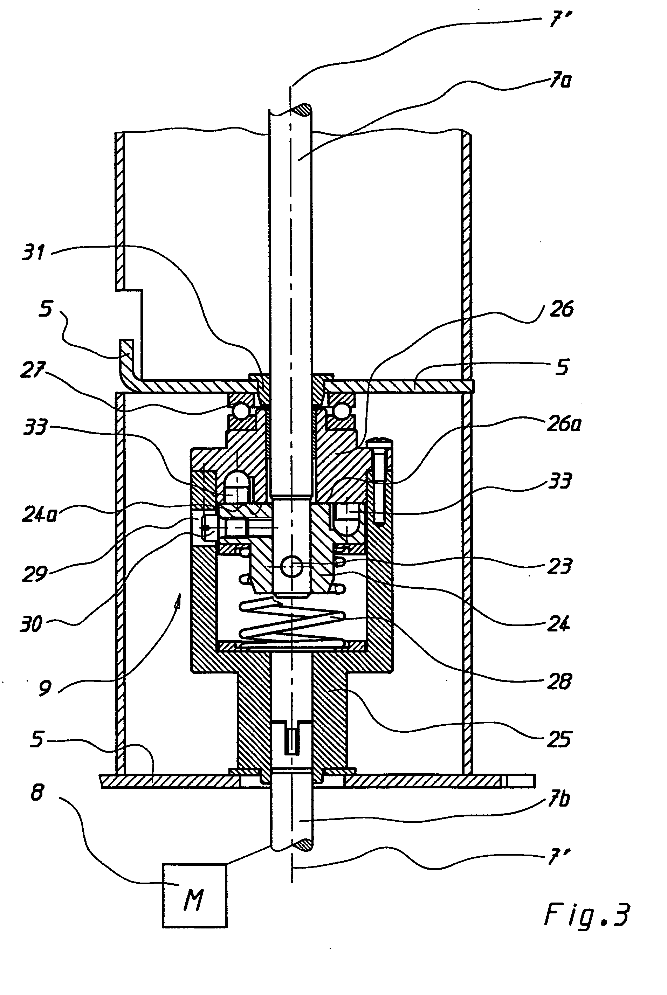

An dem der Hülse 16 abgewandten, unteren Ende des ersten Teiles 7a der Antriebswelle 7 ist, wie die Fig. 3 und 4 zeigen, über einen Bolzen 23 ein Getriebeteil in Form eines ersten Flansches 24 des Hebelgetriebes 9 dreh- und verschiebefest befestigt. Der erste Flansch 24 ist in einer Hülse 25 aufgenommen, die mit dem zweiten Teil 7b der Antriebswelle 7 verbunden ist und durch den Motor 8 angetrieben wird. Die Hülse 25 ist nach oben hin durch ein Getriebeteil in Form eines zweiten Flansches 26 verschlossen, der sich über Drehlager 27 an einem Teil der Konsole 5 abstützt und eine mittige Öffnung aufweist, durch die sich der erste Teil 7a der Antriebswelle 7 dreh- und verschiebbar erstreckt, so daß der erste Flansch 24 unterhalb des zweiten Flansches 26 angeordnet ist und sich die Flansche 24 und 26 mit planparallelen Stirnflächen 26a bzw. 24a gegenüberliegen. Der erste Flansch 24 wird durch eine Feder 28 in Richtung auf den zweiten Flansch 26 und in einen Flächenkontakt zwischen den Stirnflächen 24a und 26a gedrückt.

Die Hülse 25 ist an ihrer Umfangsfläche mit einer Führung 29 in Form eines durchgehenden, etwa bohnenförmigen Schlitzes versehen, in der ein Nocken 30 läuft, der mit dem ersten Flansch 24 verbunden ist. Der Nocken 30 ist im dargestellten Ausführungsbeispiel eine in den ersten Flansch 24 eingeschraubte Schraube.

Weiterhin sind die üblichen Lagerhülsen 31 sowie Unterlegscheiben 32 vorgesehen, deren Funktion aus den Zeichnungen ersichtlich ist, und die nicht nochmals erläutert werden.

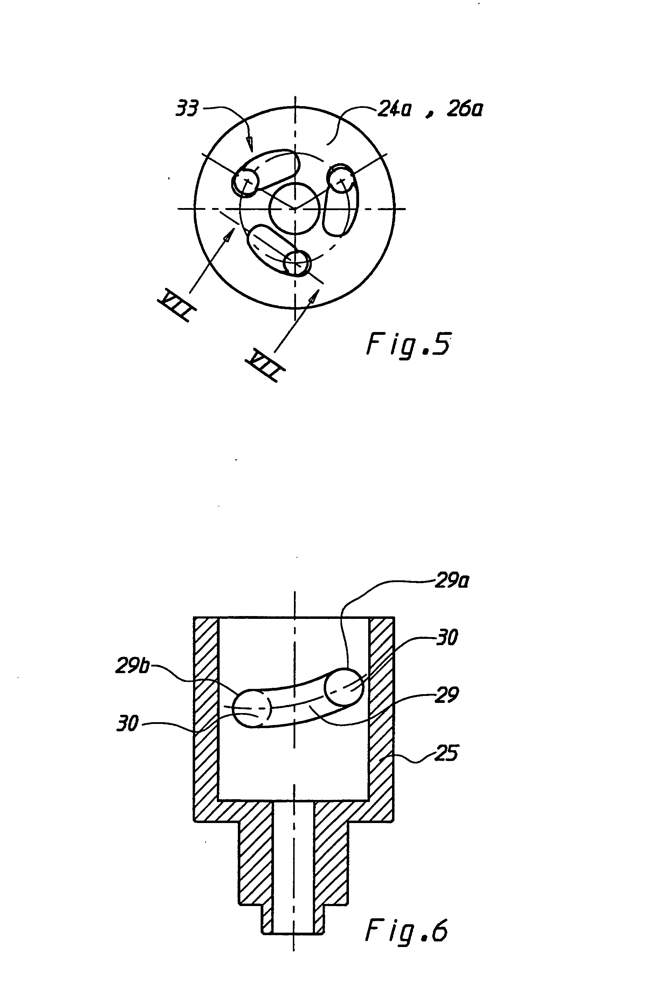

Wie auch aus den Fig. 5 und 7 bis 8 ersichtlich, weist jede der Stirnflächen 24a, 26a der beiden Flansche 24 und 26 wenigstens eine, bevorzugt drei, langgestreckte Ausnehmungen 33 auf. Die Ausnehmungen 33 sind in beiden Stirnflächen 24a und 26a in Draufsicht identisch ausgebildet und angeordnet, d.h. leicht spiralig von innen nach außen verlaufend. Werden dann die beiden Flansche mit ihren Stirnflächen 24a und 26a aufeinanderliegend angeordnet, wie in Fig. 3 gezeigt, verlaufen die Ausnehmungen 33 spiegelbildlich.

Jeder der Ausnehmungen 33 weist einen vergleichsweise flachen, langgestreckt ovalen Bereich 33a und eine am radial außenliegenden Ende angeordnete, im wesentlichen halbkugelförmige Vertiefung 33b auf, die über einen Kipppunkt bzw. eine Kipplinie 33c in die flachere Ausnehmung 33a übergeht. Die der Vertiefung 33b anliegende Begrenzungsfläche der Ausnehmung 33 ist als Anschlag 33d ausgebildet. In jedem Paar der einander zugewandten Ausnehmungen 33 in den Stirnflächen 24a und 26a ist jeweils ein Hebel in Form eines lose eingelegten Stiftes 34 aufgenommen, der abgerundete Enden 34a und 34b aufweist. Die Enden 34a und 34b sind zweckmäßigerweise ebenfalls halbkugelig gerundet, wobei der Durchmesser des Stiftes etwas kleiner ist als der Durchmesser der halbkugeligen Vertiefung.

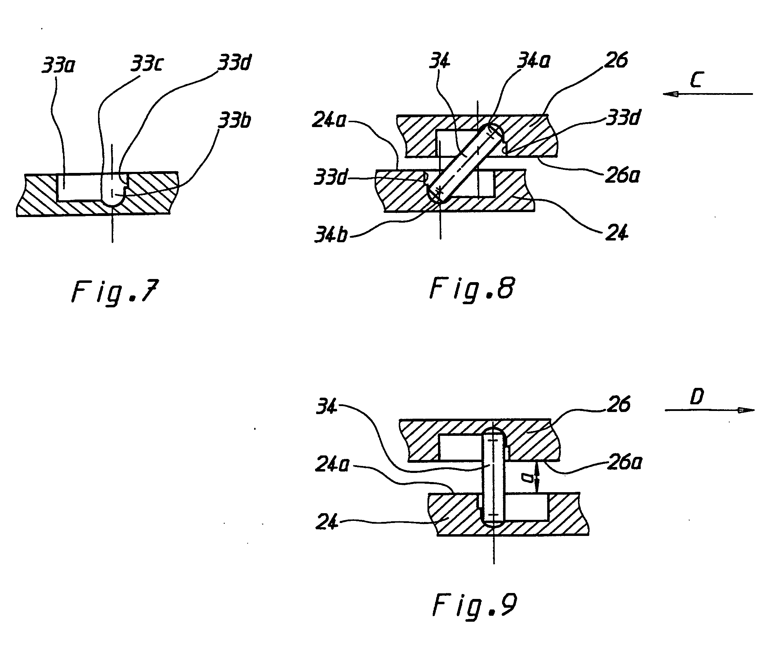

Jeder der Stifte 34 ist etwas länger als die Längserstreckung der Ausnehmung 33, so daß er, wie Fig. 8 zeigt, schräg durch beide Ausnehmungen 33 verläuft, wenn die beiden Stirnflächen 24a und 26a aufeinanderliegen, wobei seine Enden 34a und 34b in die Vertiefungen 33b der Ausnehmungen reichen und an den Anschlägen 33d anliegen. Bewegen sich die beiden Stirnflächen 24a und 26a relativ zueinander, beispielsweise indem der zweite Flansch 26 in Richtung des Pfeiles C angetrieben wird, so verkeilt sich der Stift 34, unterstützt durch die Kraft der Feder 28, zwischen den Kipppunkten 33c und den Anschlägen 33d so in beiden Ausnehmungen 33, daß der andere Flansch, in diesem Falle der erste Flansch 24, in der Drehung mitgenommen wird. Wird die Mitnahme des ersten Flansches 24 durch einen Anschlag, beispielsweise durch einen Eingriff des Ansatzes 18 in das Gegenlager 19 blockiert, so richten sich die Stifte 34 über die Kipppunkte 33c zunehmend auf und gleiten ab einem bestimmten Neigungswinkel mit ihren freien Enden 34a und 34b in die Vertiefungen 33b (Fig. 9) hinein und drücken die beiden Stirnflächen 24a und 26a gegen die Kraft der Feder 28 in ihren maximalen Abstand a zueinander, wobei sich die Stifte 34 im wesentlichen parallel zur Drehachse 7' in einer durch den Abmessungsunterschied zwischen Stift 34 und Vertiefung 33b und/oder durch die Ausrichtung der Anschläge 33d bezüglich der Drehachse 7' bestimmte Über-Totpunktlage ausrichten.

Solange der erste Flansch 24 über die Stifte 34 beim Antrieb des zweiten Flansches 26 mitgenommen wird, befindet sich der Nocken 30 im oberen Bereich der Führung 29 (Fig. 6) in Anlage an der als Anschlag 29a ausgebildeten Endfläche der Führungs 29. Wird die Mitnahme des ersten Flansches 24 gestoppt, und bewegen sich die beiden Flansche 24, 26 in den Abstand a zueinander, bewegt sich der Nocken 30 in der Führung 29 nach unten bis in die gestrichelt gezeichnete Position in Fig. 6, d.h. bis in Eingriff mit der als Anschlag 29b ausgebildeten Begrenzung der Führung 29. Befindet sich der Nocken 30 am Anschlag 29b, so steht der Stift 34 in der in Fig. 9 dargestellten Über-Totpunktlage und wird durch den Anschlag 29b gegen ein weiteres Überkippen gesichert. Auf diese Weise sperrt der Stift 34 die beiden Flansche 24 und 26 in der in Fig. 9 dargestellten, zueinander beabstandeten Lage. Gleichzeitig begrenzt die Führung 29 die axiale Relativbewegung der beiden Flansche 24, 26 und verhindert somit, daß die nur lose eingelegten Stifte 34 zwischen den Flanschen 24 und 26 herausfallen können, wenn beispielsweise unbeabsichtigt auf die sich in ihrer ersten Position befindenden Abdeckung gedrückt wird.

Die erfindungsgemäße Kaffeemaschine 1 arbeitet wie folgt. Zu Beginn des Brühvorganges befindet sich die Abdeckung 6 in der in Fig. 1 dargestellten, ersten Position, in der die Öffnung 4a der Brüheinrichtung nach oben freiliegt und Kaffeemehl in die Brüheinrichtung 4 eingefüllt werden kann. Dann wird der Motor 8 betätigt und verdreht über den zweiten Teil der Antriebswelle 7b und die Hülse 25 den fest mit der Hülse 25 verbundenen, zweiten Flansch in Richtung des Pfeiles C. Beim Antrieb des zweiten Flansches 26 wird über die Stifte 34 der erste Flansch 24 und dadurch der erste Teil der Antriebswelle 7a, die Hülse 16 und die Abdeckung 6 in Richtung des Pfeiles A in Fig. 1 nach links verschwenkt, bis der Ansatz 18 mit dem Gegenlager 19 in Eingriff gelangt und ein weiteres Verschwenken der Abdeckung 6, der Hülse 16, des ersten Teiles 7a und des ersten Flansches 24 verhindert. Dreht jetzt der Motor 8 den zweiten Teil der Antriebswelle 7b die Hülse 25 und den ersten Flansch 26 weiter in der anfänglichen Richtung, richten sich die Stifte 34 über die Kipppunkte 33c langsam auf, bis ihrer freien Ende 34a und 34b in die Vertiefungen 33b hineingleiten. Dabei hat sich der Nocken 30, der während der Mitnahme des ersten Flansches 24 in Anlage am Anschlag 29a verblieben ist, in der Führung 29 nach unten bewegt und liegt nun am Anschlag 29b an, was, zusammen mit den Anschlagflächen 33d der Ausnehmungen 33 ein Überkippen des Stiftes 34 verhindert. Beim Aufrichten des Stiftes 34 in eine Stellung im wesentlichen parallel zur Drehachse 7' wird der erste Flansch 24 entgegen der Kraft der Feder 28 nach unten gedrückt und nimmt den ersten Teil 7a der Antriebswelle 7 bei dieser axialen Längsbewegung mit. Dadurch wird die Hülse 16 gegen die Kraft der Feder 22 in den Zylinder 21 gezogen und nimmt den sich am freien Ende im Gegenlager 19 abstützenden Auslegerarm 12 mit. Sobald sich das Dichtteil 10 auf die obere Öffnung 4a auflegt, wird der Auslegerarm 12 um den Bolzen 14 (unter Komprimierung der Feder 20) in eine Stellung parallel zum Dichtteil 10 verschwenkt und drückt das Dichtteil 10 über den Bolzen 11 in die dritte Position der Abdeckung 6, d.h. in dichtendem Eingriff des Dichtteiles 10 mit der oberen Öffnung 4a.

Der in der Brüheinrichtung 4 sich aufbauende Überdruck ist bestrebt, die Antriebswelle 7a und den mit ihr verbundenen, ersten Flansch 24 über das Dichtteil 10, den Bolzen 11, den Auslegerarm 12, den Bolzen 14 und die Hülse 16 anzuheben. Dies wird durch die senkrecht stehenden Stifte 34 in Verbindung mit dem Anschlag 29b verhindert, so daß die Abdeckung 6 in ihrer dritten Position wirksam gegen ein Öffnen gesperrt ist.

Ist der Brühvorgang beendet, wird der Motor 8 in Gegenrichtung angetrieben und verdreht den zweiten Flansch 26 in Richtung des Pfeiles D in Fig. 9. Dadurch kippen die Stifte 34 wieder in ihre Schräglage gemäß Fig. 8 und der Nocken 30 kann sich wieder in Anlage an den Anschlag 29a bewegen. Der erste Flansch 24 wird durch kombinierte Wirkung der Federn 28 und 22 wieder in die in Fig. 3 und Fig. 8 gezeigte Stellung bewegt, die Hülse 16 hebt den Auslegerarm 12 mit dem Bolzen 11 und dem damit verbundenen Dichtteil 10 an, so daß sich die Abdeckung 6 wieder in der in Fig. 2 dargestellten, zweiten Position befindet. Beim Weiterdrehen wird der erste Flansch 24 über die nunmehr wieder schrägliegenden Stifte 34 und ihre Kipppunkte sowie über den am Anschlag 29a anliegenden Nocken 30 in Gegenrichtung mitgenommen, so daß sich auch der erste Teil 7a der Antriebswelle zusammen mit der Abdeckung 6 wieder in die in Fig. 1 dargestellte, erste Position verdreht, wo durch einen Anschlag und gegebenenfalls einen Endschalter für den Motor 8 dafür gesorgt wird, daß die Drehbewegung der Abdeckung 6 in der ersten Position endet.

In Abwandlung des beschriebenen und gezeichneten Ausführungsbeispiels können anstelle der losen Stifte andere, geeignete Hebelgetriebe, beispielsweise Winkelhebel mit einer Totpunktstellung, verwendet werden. Auch die Anzahl der zum Sperren der Abdekkung verwendeten Hebel kann variiert werden.

## Patentansprüche

1. Kaffeemaschine (1) mit einer Brüheinrichtung (4), die eine durch eine Abdeckung (6) verschließbare, obere Öffnung (4a) aufweist, wobei die Abdeckung (6) für eine Bewegung zwischen einer die Öffnung (4a) freigebenden Position und einer Position zum Verschließen der Öffnung (4a) antreibbar und gegen ein unbeabsichtigtes Öffnen unter einem Innendruck in der Brüheinrichtung (4) sperrbar ist, wobei die Bewegung der Abdeckung (6) über ein Hebelgetriebe (9) in einem einphasigen Bewegungsablauf erfolgt und, wobei das Hebelgetriebe (9) in einer Über-Totpunktlage die Abdeckung (6) sperrt, **dadurch gekennzeichnet, dass** die Abdeckung (6) für eine Bewegung zwischen der die Öffnung (4a) freigebenden, ersten Position, einer zweiten Position oberhalb der Öffnung (4a) und der dritten Position zum Verschließen der Öffnung (4a) durch einen gemeinsamen Antrieb (8) antreibbar und in der dritten Position gegen ein unbeabsichtigtes Öffnen unter dem Innendruck in der Brüheinrichtung (4) sperrbar ist, und dass die Abdeckung (6) zum Bewegen zwischen der ersten und der zweiten Position um eine Drehachse (7') verschwenkbar und zum Bewegen zwischen der zweiten und der dritten Position entlang der Drehachse (7') axial verschiebbar ist.

2. Kaffeemaschine nach Anspruch 1, **dadurch gekennzeichnet, dass** die Drehachse (7') durch die Längsmittellinie einer Antriebswelle (7) gebildet ist, die durch den Antrieb (8) über das Hebelgetriebe (9) mit umkehrbarer Drehrichtung antreibbar ist.

3. Kaffeemaschine nach Anspruch 1 oder 2, **dadurch gekennzeichnet, dass** das Hebelgetriebe (9) ein erstes, mit der Abdeckung (6) verbundenes Getriebeteil (24), ein zweites, mit dem Antrieb (8) verbundenes Getriebeteil (26) und einen zwischen beiden Getriebeteilen (24, 26) verschwenkbar angeordneten Hebel (34) aufweist, wobei die Getriebeteile (24, 26) relativ zueinander bewegbar sind und in einer Relativstellung zueinander durch den in seiner Über-Totpunktlage befindlichen Hebel (34) sperrbar sind.

4. Kaffeemaschine nach einem der Ansprüche 1 bis 3, **dadurch gekennzeichnet, dass** das Hebelgetriebe (9) einen ersten und einen zweiten Flansch (24, 26) enthält, dass der erste Flansch (24) drehfest und axial gesichert mit einem ersten, mit der Abdeckung (6) verbundenen Teil (7a) der Antriebswelle (7) verbunden ist und mit diesem Teil (7a) und der Abdeckung (6) entlang der Drehachse (7') der Antriebswelle (7) axial relativ zum zweiten Flansch (26) verschiebbar ist, dass der zweite Flansch (26) drehfest und axial gesichert mit einem zweiten, mit dem Antrieb (8) verbundenen Teil (7b) der Antriebswelle (7) verbunden ist, und dass zwischen einander zugewandten Stirnflächen (24a, 26a) der Flansche (24, 26) der Hebel in Form eines Stiftes (34) verschwenkbar aufgenommen ist und in seiner Über-Totpunktlage die beiden Stirnflächen (24a, 26a) in einem vorbestimmten, axialen Abstand (a) zueinander sperrt.

5. Kaffeemaschine nach Anspruch 4, **dadurch gekennzeichnet, dass** beide Enden (34a, 34b) des Stiftes (34) in seiner Über-Totpunktlage in jeweils einer lagesichernden Vertiefung (33b) in jeweils einer der Stirnseiten (24a, 26a) sitzt.

6. Kaffeemaschine nach Anspruch 4 oder 5, **dadurch gekennzeichnet, dass** der Stift (34) in seiner Über-Totpunktlage im wesentlichen parallel zur Drehachse (7') angeordnet ist.

7. Kaffeemaschine nach einem der Ansprüche 4 bis 6, **dadurch gekennzeichnet, dass** zum Übertragen der Bewegung zwischen der ersten und zweiten Position vom Antrieb (8) auf die Abdeckung (6) der Stift (34) mit einem seiner Enden (34b) an einem Anschlag (33d) am ersten Flansch (24) und mit seinem anderen Ende (34a) an einem Anschlag (33d) am zweiten Flansch (26) anliegt.

8. Kaffeemaschine nach einem der Ansprüche 1 bis 7, **dadurch gekennzeichnet, dass** der Über-Totpunktlage des Hebelgetriebes (9) wenigstens ein Anschlag (18, 19, 29b, 30) zugeordnet ist.

9. Kaffeemaschine nach einem der Ansprüche 4 bis 8, **dadurch gekennzeichnet, dass** eine Führung (29, 30) zur Begrenzung der axialen Relativbewegung der Flansche (24, 26) vorgesehen ist.

10. Kaffeemaschine nach einem der Ansprüche 4 bis 9, **dadurch gekennzeichnet, dass** das Hebelgetriebe (9) eine am zweiten Teil (7b) der Antriebswelle (7) angeordnete, durch den zweiten Flansch (26) verschlossene Hülse (25) aufweist, dass sich der erste Teil (7a) der Antriebswelle (7) axial verschiebbar durch den zweiten Flansch (26) erstreckt, und dass in der Hülse (25) der am ersten Teil (7a) der Antriebswelle (7) fest angeordnete, erste Flansch (24) axial verschiebbar und um die Drehachse (7') zusammen mit sowie relativ zum zweiten Flansch (26) verdrehbar aufgenommen ist.

11. Kaffeemaschine nach einem der Ansprüche 1 bis 10, **dadurch gekennzeichnet, dass** die Abdeckung (6) an einem vom Hebelgetriebe (9) bewegbaren Auslegerarm (12) bewegbar und in die dritte Position drückbar ist.

12. Kaffeemaschine nach Anspruch 11, **dadurch gekennzeichnet, dass** der Auslegerarm (12) mit einem Ende um eine parallel zur Öffnung (4a) verlaufende Schwenkachse (14) schwenkbar und um eine dazu senkrecht verlaufende Drehachse (7') drehbar gelagert ist, und mit seinem anderen, freien Ende (18) zumindest in der dritten Position mit einem Gegenlager (19) zum Begrenzen der Dreh- und der Schwenkbewegung in Eingriff steht.

13. Kaffeemaschine nach Anspruch 12, **dadurch gekennzeichnet, dass** die Abdeckung (6) um eine parallel zur Öffnung (4a) verlaufende Achse (11) schwenkbar am Auslegerarm (12) befestigt ist.

## Claims

1. Coffee machine (1) with a brewing device (4) comprising a top opening (4a) which can be closed by a cover (6), wherein the cover (6) can be driven to move between a position opening the opening (4a) and a position for closing the opening (4a) and can be locked to prevent unintentional opening by internal pressure in the brewing device (4), the cover (6) is moved in a single-phase sequence of motion via a lever mechanism (9) and the lever mechanism (9) locks the cover (6) in an over-centre position, **characterised in that** the cover (6) can be driven by a common drive (8) to move between the first position opening the opening (4a), a second position above the opening (4a) and the third position for closing the opening (4a) and can be locked in the third position to prevent unintentional opening by the internal pressure in the brewing device (4), and that the cover (6) can be pivoted about an axis of rotation (7') to move between the first position and the second position and can be displaced axially along the axis of rotation (7') to move between the second position and the third pusition.

2. Coffee machine according to claim 1, **characterised in that** the axis of rotation (7') is formed by the longitudinal centre line of a drive shaft (7) which can be driven with a reversible direction of rotation by the drive (8) via the lever mechanism (9).

3. Coffee machine according to claim 1 or claim 2, **characterised in that** the lever mechanism (9) comprises a first part (24) connected to the cover (6), a second part (26) connected to the drive (8) and a lever (34) pivotably arranged between the two parts (24, 26), wherein the parts (24, 26) can move relative to one another and can be locked in their relative positions by the lever (34) situated in its over-centre position.

4. Coffee machine according to one of claims 1 to 3, **characterised in that** the lever mechanism (9) contains a first flange and a second flange (24, 26), that the first flange (24) is connected in a torsion-resistant and axially secured manner to a first part (7a) of the drive shaft (7) connected to the cover (6) and is axially displaceable relative to the second flange (26) together with this part (7a) and the cover (6) along the axis of rotation (7') of the drive shaft (7), that the second flange (26) is connected in a torsion-resistant and axially secured manner to a second part (7b) of the drive shaft (7) connected to the drive (8) and that the lever in the form of a pin (34) is pivotably received between end faces (24a, 26a) of the flanges (24, 26) directed towards one another and locks the two end faces (24a, 26a) at a predetermined axial distance (a) from one another in its over-centre position.

5. Coffee machine according to claim 4, **characterised in that** the two ends (34a, 34b) of the pin (34) are each seated in respective position-fixing depressions (33b) in the end faces (24a, 26a) in its over-centre position.

6. Coffee machine according to claim 4 or claim 5, **characterised in that** the pin (34) is arranged essentially parallel to the axis of rotation (7') in its over-centre position.

7. Coffee machine according to one of claims 4 to 6, **characterised in that** the pin (34) bears by means of one of its ends (34b) against a stop (33d) on the first flange (24) and by means of its other end (34a) against a stop (33d) on the second flange (26) in order to transmit the movement between the first position and the second position from the drive (8) to the cover (6).

8. Coffee machine according to one of claims 1 to 7, **characterised in that** at least one stop (18, 19, 29b, 30) is associated with the over-centre position of the lever mechanism (9).

9. Coffee machine according to one of claims 4 to 8, **characterised by** a guide (29, 30) for limiting the relative axial movement of the flanges (24, 26).

10. Coffee machine according to one of claims 4 to 9, **characterised in that** the lever mechanism (9) comprises a sleeve (25) arranged on the second part (7b) of the drive shaft (7) and closed by the second flange (26), that the first part (7a) of the drive shaft (7) extends in an axially displaceable manner through the second flange (26) and that the first flange (24) fixedly arranged on the first part (7a) of the drive shaft (7) is received in an axially displaceable manner in the sleeve (25) and in such a manner that it can rotate about the axis of rotation (7') together with and relative to the second flange (26).

11. Coffee machine according to one of claims 1 to 10, **characterised in that** the cover (6) can move on a bracket arm (12) movable by the lever mechanism (9) and can be pressed into the third position.

12. Coffee machine according to claim 11, **characterised in that** the bracket arm (12) can pivot by means of one end about a pivot axis (14) extending parallel to the opening (4a) and is mounted to rotate about an axis of rotation (7') extending perpendicular thereto, and is in engagement by means of its other, free end (18), at least in the third position, with a support (19) for limiting the rotational and pivotal movement.

13. Coffee machine according to claim 12, **characterised in that** the cover (6) is secured to the bracket arm (12) in such a manner that it can pivot about an axis (11) extending parallel to the opening (4a).

## Revendications

1. Machine à café (1), munie d'un dispositif bouilleur (4), présentant une ouverture supérieure (4a), obturable par un couvercle (6), le couvercle (6) étant susceptible d'être entraîné, pour effectuer un déplacement entre une position dégageant l'ouverture (4a) et une position de fermeture de l'ouverture (4a), et étant susceptible d'être bloqué contre toute ouverture intempestive sous l'effet d'une pression intérieure régnant dans le dispositif bouilleur (4), le déplacement du couvercle (6) s'effectuant par l'intermédiaire d'une transmission du levier (9), lors d'un déroulement cinématique en une phase, et la transmission à levier (9), en une position de point mort supérieure, bloquant le couvercle (6), **caractérisée en ce que** le couvercle (6) est susceptible d'être entraîné pour effectuer un déplacement entre la première position, dégageant l'ouverture (4a), une deuxième position située au-dessus de l'ouverture (4a) et la troisième position de fermeture de l'ouverture (4a), ceci au moyen d'un dispositif d'entraînement (8) commun et, à la troisième position, étant susceptible d'être bloqué contre une ouverture intempestive sous l'effet de la pression intérieure régnant dans le dispositif bouilleur (4), et **en ce que** le couvercle (6) est susceptible de pivoter autour d'un axe de rotation (7'), pour se déplacer entre la première et la deuxième position, et étant déplaçable axialement le long de l'axe de rotation (7'), pour se déplacer entre la première et la troisième position.

2. Machine à café selon la revendication 1, **caractérisée en ce que** l'axe de rotation (7') est formé par l'axe longitudinal d'un arbre d'entraînement (7) pouvant être entraîné en sens de rotation inversible au moyen du dispositif d'entraînement (8), par l'intermédiaire de la transmission à levier (9).

3. Machine à café selon la revendication 1 ou 2, **caractérisée en ce que** la transmission à levier (9) présente une première partie de transmission (24) reliée au couvercle (6), une deuxième partie de transmission (26) reliée au dispositif d'entraînement (8), et un levier (34), disposé de façon à pouvoir pivoter entre les deux parties de transmission (24, 26), les parties de transmission (24, 26) étant déplaçables l'une par rapport à l'autre et étant blocables en une position relative, l'une par rapport à l'autre, au moyen du levier (34) se trouvant à sa position de point mort supérieure.

4. Machine à café selon l'une des revendications 1 à 3, **caractérisée en ce que** la transmission à levier (9) contient une première et une deuxième bride (24, 26), **en ce que** la première bride (24) est assurée de façon assujettie en rotation et axialement à une première partie (7a), reliée au couvercle (6), de l'arbre d'entraînement (7) et est déplaçable avec cette partie (7a) et le couvercle (6), le long de l'axe de rotation (7') de l'arbre d'entraînement (7), axialement par rapport à la deuxième bride (26), **en ce que** la deuxième bride (26) est assurée, de façon assujettie en rotation et axialement, à une deuxième partie (7b), reliée à l'entraînement (8), de l'arbre d'entraînement (7), et **en ce que**, entre des faces frontales (24a, 26a), tournées l'une vers l'autre, des brides (24, 26), le levier ayant la forme d'une tige (34) est logé à pivotement et, à sa position de point mort supérieure, bloque l'une par rapport à l'autre les deux faces frontales (24a, 26a) à un espacement axial (a) prédéterminé.

5. Machine à café selon la revendication 4, **caractérisée en ce que** les deux extrémités (34a, 34b) de la tige (34), à sa position de point mort supérieure, se placent chacune dans une cavité (33b) assurant une fonction de fixation de position, cavité ménagée dans chacune des faces frontales (24a, 26a).

6. Machine à café selon la revendication 4 ou 5, **caractérisée en ce que** la tige (34), à sa position de point mort supérieure, est disposée sensiblement parallèlement à l'axe de rotation (7').

7. Machine à café selon l'une des revendications 4 à 6, **caractérisée en ce que**, pour transmettre le mouvement entre la première et la deuxième position, depuis le dispositif d'entraînement (8) au couvercle (6), la tige (34) appuie, par l'une de ses extrémités (34b), sur une butée (33d), ménagée sur la première bride (24) et, par son autre extrémité (34a), sur une butée (33d), ménagée sur la deuxième bride (26).

8. Machine à café selon l'une des revendications 1 à 7, **caractérisée en ce qu'**à la position de point mort supérieure de la transmission à levier (9) est associée au moins une butée (18, 19, 29b, 30).

9. Machine à café selon l'une des revendications 4 à 8, **caractérisée en ce qu'**un guidage (29, 30) est prévu, pour limiter la course de déplacement relatif axial des brides (24, 26).

10. Machine à café selon l'une des revendications 4 à 9, **caractérisée en ce que** la transmission à levier (9) présente une douille (25), disposée sur la deuxième partie (7b) de l'arbre d'entraînement (7), fermée par la deuxième bride (26), **en ce que** la première partie (7a) de l'arbre d'entraînement (7) s'étend, de façon déplaçable axialement, à travers la deuxième bride (26) et **en ce que**, dans la douille (25), la première bride (24), disposée de façon fixe sur la première partie (7a) de l'arbre d'entraînement (7), est déplaçable axialement et est logée de façon à pouvoir tourner autour de l'axe de rotation (7'), conjointement ainsi relativement par rapport à la deuxième bride (26).

11. Machine à café selon l'une des revendications 1 à 10, **caractérisée en ce que** le couvercle (6) peut être déplacé sur un bras articulé (12), déplaçable par la transmission à levier (9), et être pressé à la troisième position.

12. Machine à café selon la revendication 11, **caractérisée en ce que** le bras articulé (12) peut pivoter par une extrémité autour d'un axe de pivotement (14), s'étendant parallèlement à l'ouverture (4a), et est monté à rotation autour d'un axe de rotation (7') s'étendant perpendiculairement à celui-ci et peut venir en prise, par son autre extrémité (18) libre, au moins à la troisième position, avec un contre-palier (19), dans le but de limiter le mouvement de rotation et de pivotement.

13. Machine à café selon la revendication 12, **caractérisée en ce que** le couvercle (6) est fixé sur le bras articulé (12), de façon à pouvoir pivoter autour d'un axe (11), s'étendant parallèlement à l'ouverture (4a).
